# EUROPEAN PATENT APPLICATION

(11) **EP 1 526 518 A2**
(43) Date of publication of application: **27.04.2005**
(21) Application number: 04024935.1
(22) Date of filing: 20.10.2004
(51) Int. Cl.: G11B 7/013, G11B 7/007

(54) **Optical information-recording medium**

(30) Priority: 22.10.2003 JP 2003361465
(71) Applicant: Fuji Photo Film Co., Ltd., Kanagawa (JP)
(72) Inventor: Usami, Yoshihisa Fuji Photo Film Co., Ltd., Odawara-shi Kanagawa (JP)
(74) Representative: HOFFMANN - EITLE

(57) **Abstract**

An optical information-recording medium capable of information recording at high density requiring no pre-writing, and capable of obtaining a pre-pit signal without any practical problems even when the depths are identical of a pre-pit and a pre-groove is provided. The optical information-recording medium is capable of recording and reproducing information by irradiation of a laser in which at least pre-pits 10 and pre-grooves 20 are formed, the laser wavelength is 600 nm or less, and a width of the pre-pit 10 is larger than a width of a pre-groove 20.

## Description

### BACKGROUND OF THE INVENTION

### Field of the Invention

The present invention relates to an optical information-recording medium and particularly to an optical information-recording medium in which auxiliary information such as identification information and copyright protection information are recorded.

### Description of the Related Art

In recent years, an optical information-recording medium has been demanded, which is capable of recording information with a higher recording density. To meet such demands, a write-once digital versatile disk (the so-called DVD-R) has already been.

Networks such as Internets and high vision televisions also recently have rapidly become popular. Further, in view of the broadcasting of HDTV (High Definition Television), a high capacity recording medium for recording image information simply and at reduced costs has been increasingly in demand.

While the DVD-R has to some extent secured a position as a high capacity recording medium, it cannot be said to have a recording capacity high enough to cope with future demand. Accordingly, an optical information-recording medium which has already secured a higher recording capacity by using a laser light of a shorter wavelength than that of the DVD-R, thereby enhancing the recording density, is being developed.

However, along with the increase in recording capacity, techniques for preventing circulation of information recorded in the optical information-recording media and for preventing unauthorized copying of such information have been developed. In other words, demands have been made for the security technique to protect the recording of individual items of information onto an optical information-recording medium.

To cope with such demands, a technique has been widely adopted of providing a bar-code over a written recordable area (Burst Cutting Area, hereinafter sometimes referred to as a "BCA") in a pit area of a read only memory (ROM) optical information-recording medium and of recording auxiliary information, which varies from medium to medium, such as information concerning coding and decoding keys (for example, refer to JP-A Nos. 2002-133726, 2002-197670, 2002-208188 and 2003-196843).

However, particularly, inDVD-Rs, recording of auxiliary information (pre-writing) has regularly been conducted on each individual medium. Accordingly; whenever a recording has failed, the optical information-recording medium itself has become defective, reading to reductions in the productivity.

Thus, from the point of view of factors such as productivity, an optical information-recording medium has been provided in which grooves and pre-pits are used in combination (for example, refer to Japanese Patent No. 2957651). However, it has been necessary to adjust the depths of the grooves and the pre-pits in order to obtain an adequate pre-pit signal. Nonetheless, changing the depths of the grooves and the pre-pits in the process of mastering is simply not practical in terms of mass production.

### SUMMARY OF THE INVENTION

The present invention has been achieved in order to overcome the foregoing difficulties.

In other words, the invention provides an optical information-recording medium, which is capable of recording information at high density, requiring no pre-writing and capable of obtaining a pre-pit signal at a level at which no practical problem even when the depths are identical between the pre-pits and pre-grooves.

The invention provides an optical information-recording medium capable of recording and reproducing information by the irradiation of a laser, in which at least pre-pits and pre-grooves (hereinafter a "pre-groove" may sometimes be referred to as "groove") are formed, and wherein the wavelength of the laser is 600 nm or less, and the width of a pre-pit is larger than the width of a pre-groove.

### BRIEF DESCRIPTION OF THE DRAWINGS

Fig. 1 is a partial cross sectional view for explaining pre-pits and pre-grooves formed in a substrate; and
Fig. 2 is a partial cross sectional view for explaining the shape of grooves in a substrate.

### DETAILED DESCRIPTION OF THE INVENTION

### [Optical information-recording medium]

The optical information-recording medium according to the present invention can record and reproduce information by the irradiation of a laser, in which at least pre-pits and pre-grooves are formed, and wherein the wavelength of the laser is 600 nm or less and the width off a pre-pit is larger than the width of a pre-groove.

Since by maintaining the wavelength of the laser within 600 nm or less, the track pitch and the groove width, etc. of the pre-grooves can be decreased compared with those of DVD, etc. an optical information-recording medium at high recording density can be obtained.

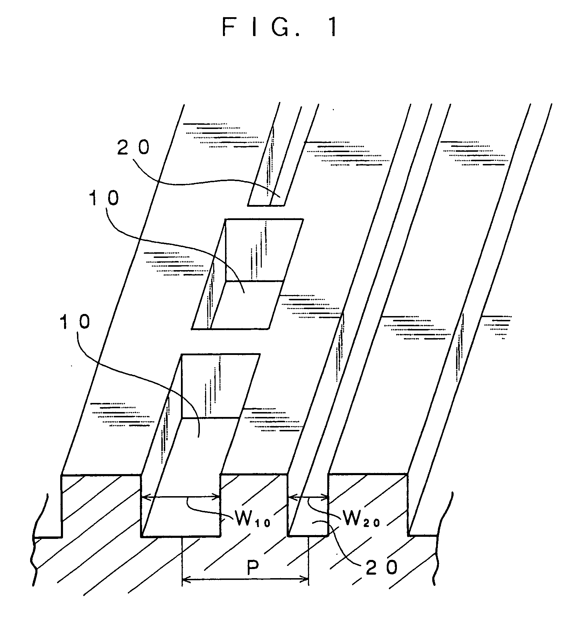

Fig. 1 shows a partial cross sectional view off a substrate formed with pre-pits and pre-grooves. As shown in Fig. 1, pre-pits 10 each of a width greater than that of pre-grooves 20 are formed along a pre-groove 20. In a case where a pre-groove is formed concentrically, as shown in Fig. 1 one concentric circle may be constituted by a pre-pit 10 and the pre-groove 20 present together or may be formed only of a pre-pit 10 as shown in Fig. 1. The pre-pits and/or pre-grooves may sometimes be formed, for example, in a BCA, such ass can be found in a DVD, etc.

Since the width of a pre-pit 10 (corresponding to W10 in Fig. 1) is greater than the width of a pre-groove 20 (corresponding to W20 in Fig. 1), the amplitude of a pre-pit signal can be enhanced. As a result, even when the depths of the pre-groove 20 and the pre-pit 10 are made identical, the pre-pit signal can be generated without any practical problem being encountered.

A pre-pit 10 and a pre-groove 20 can be formed on the surface of a substrate, for example, by injection-molding or by extrusion-molding. In these circumstances, simply, the width of the pre-pit 10 can be made larger than the width of the pre-groove 20 easily by the design of a stamper. In other words, since a design change is easier than the change in the depths of the pre-grooves 20 and the pre-pits 10, an optical information-recording medium of high productivity can be obtained.

"The width of a pre-pit is greater than the width of a pre-groove" means that a difference between the width of a pre-pit 10 (W10) and the width of a pre-groove 20 (W20) (W10 - W20) is within a range of from 10 to 100 nm. When the difference is confined within such a range, practical approach can be maintained while the amplitude of the pre-pit signal is enhanced.

In the range described above, a preferred upper limit for (W10 - W20) is 80 nm, more preferably, 70 nm and, further preferably, 60 nm. On the other hand, a preferred lower limit is 20 nm, more preferably, 30 nm and, further preferably, 50 nm.

The upper limit for a width of the pre-pit 10 (length of the radial direction) is preferably 300 nm, more preferably, 270 nm and, further preferably, 230 nm. Further, the lower limit is, preferably, 100 nm, more preferably, 130 nm and, further preferably, 180 nm.

The upper limit for a width of the pre-groove 20 (length of the radial direction) is, preferably, 250 nm, more preferably, 220 nm and, further preferably, 190 nm. Further, the lower limit is, preferably, 80 nm, more preferably, 130 nm and, further preferably, 150 nm.

The upper limit for a depth of each of the pre-pits 10 and the pre-grooves 20 is, preferably, 200 nm, more preferably, 160 nm and, further preferably, 120 nm. Further, the lower limit is, preferably, 30 nm, more preferably, 40 nm, further preferably, 50 nm and, most preferably, 60 nm.

A definition of factors such as the width of a pre-groove, is described later.

The upper limit for a pitch of the pre-pits 10 and/or pre-grooves 20 (corresponding to P in Fig. 1) is, preferably, 1000 nm, more preferably, 600 nm, further preferably, 400 nm and, particularly preferably, 320 nm. Further, the lower limit is, preferably, 50 nm, more preferably 100 nm, further preferably, 200 nm and, most preferably, 280 nm. It is preferable that the pitch be somewhat wider than that in the recording portion since the resolution of the signal is thereby enhanced and it is preferable that a distinction can be made from the recording portion.

The upper limit for a distance (length of the circumferential diretion) between a pre-pit 10 and a pre-pit 10 is, preferably, 1000 nm, more preferably, 850 nm and, further preferably, 750 nm. Further, the lower limit is, preferably, 300 nm, more preferably, 350 nm and further preferably, 400 nm.

Various items of auxiliary information can be recorded in the optical information-recording medium by means of the formation of the pre-pits. The auxiliary information can include, for example, designation information on authorized users, designation information for usable periods, designation information on frequency of use, rental information, resolution designation information, layer designation information, user designation information, copyright owner information, copyright number information, information on manufacturers, date of manufacture information, date of sale information, sale shop information or sellers information, used set number information, area designation information, language designation information, application designation information, product user information, and information on numbers in use.

In reproducing auxiliary information, the optical information-recording medium according to the invention can provide reliability (for example, reliability in the prevention of unauthorized copies) identical with that of existing optical information-recording media.

The optical information-recording medium of the invention may be of any type such as write-once type or the rewritable type, but it is preferably the write-once type. Further, the recording system is not particularly limited but it may be a phase change type, an opto-magnetic type or a dye type, with the dye type being preferred.

A typical layer constitution is as described below.
(1) A first layer constitution comprises forming a recording layer, a reflection layer and an adhesion layer successively on a substrate, and providing a dummy substrate on the adhesion layer.
(2) A second layer constitution comprises forming a recording layer, a reflection layer, a protective layer and an adhesion layer successively on a substrate and providing a dummy substrate on the adhesion layer.
(3) A third layer constitution comprises forming a recording layer, a reflection layer, a first protective layer, an adhesion layer and a second protective layer successively on a substrate, and providing a dummy substrate on the second protective layer.
(4) A fourth layer constitution comprises a constitution of forming a recording layer, a first reflection layer, a first protective layer, an adhesion layer, a second protective layer, and a second reflection layer successively on a substrate and providing a dummy substrate on the second reflection layer.
(5) A fifth layer constitution comprises a constitution of forming a recording layer, a first reflection layer, an adhesion layer, and a second reflection layer successively on a substrate and providing a dummy substrate on the second reflection layer.

The layer constitutions (1) to (5) described above are merely quoted as examples and not only the order of the layers but also portions of the layers may be juxtaposed within the layer constitution. Furthermore, portions of the layers may be dispensed with, and, in addition, each of the layers may be constituted by either a single layer, or by plural layers.

An example of the optical information-recording medium according to the invention can thus be described as a constitution having a recording layer, a reflection layer, an adhesion layer, and a dummy substrate in that order on a disk-like first substrate, for details and a manufacturing method of the optical information-recording medium according to the invention are described below.

### (Substrate)

The substrate for the optical information-recording medium according to the invention can be optionally selected from various materials used as substrates for existing optical information recording media.

Materials used for the substrate can include, for example, glass, polycarbonate, acrylic resins such as polymethyl methacrylate, vinyl chloride type resins such as polyvinyl chloride and vinyl chloride copolymer, epoxy resins, amorphous polyolefin and polyester, and these materials may be used in combination depending requirements.

The materials used can be made in the form of a film, or in the form of a substrate having rigidity. Among materials which can be used, polycarbonate is preferred in terms of moisture resistance, dimensional stability and costs.

The thickness of the substrate is, preferably, in a range of from 0.5 to 1.2 mm. In a case where grooves are formed, it is preferable to adopt appropriate conditions on the track pitch and groove width depending on the kind of medium being applied.

Further, for attaining a higher recording density, it is preferable to use a substrate formed with grooves with a narrower track pitch than those of a CD-R or a DVD-R. In these circumstances, the track pitch of the groove is, preferably, within a range of from 200 to 400 nm and, more preferably, within a range of from 250 to 350 nm. The angle inclination for the groove is, preferably, within a range of from 20 to 80° and, more preferably, within a range of from 30 to 70°.

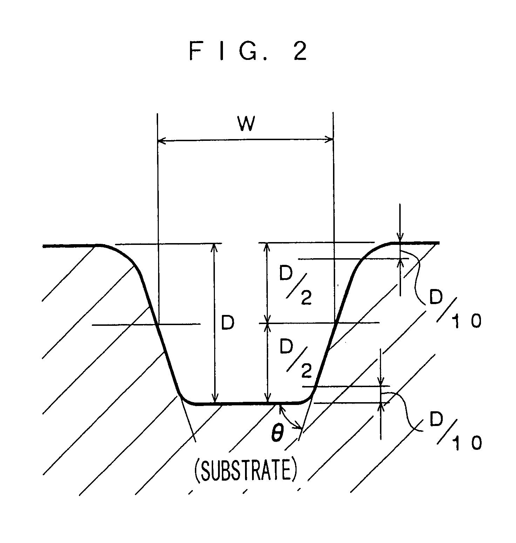

Fig. 2 is a schematic cross sectional view showing the shape of a groove. As defined in the drawing, a depth of the groove (groove depth) D is a distance between the surface of the substrate at a point before the groove is formed and the deepest groove portion; the groove width W of the groove is a width of the groove at the D/2 depth; and the angle θ of the groove inclination for the groove is an angle formed by a straight line connecting an inclination portion at the D/10 depth, calculated from the surface of the substrate before the groove is formed, and an inclination portion at the D/10 height, calculated from the deepest groove portion relative to the substrate surface. The values of the measurement described above can be calculated by means of an AFM (Atomic Force Microscope). The definition is applicable also to the case of the pre-pit and they can be measured also by the identical method.

An undercoat layer may be provided on the surface of the substrate on the side of forming the recording layer (on the side of the groove-forming surface) with an aim of enhancing the planarity and improving the adhesion, and of preventing denaturation of the recording layer.

Materials which can be used for the undercoating layer can include, for example, polymeric materials such as polymethyl methacrylate, acrylic acid - methacrylic acid copolymer, styrene - maleic acid anhydride copolymer, polyvinyl alcohol, N-methylol acrylamide, styrene - vinyl toluene copolymer, chlorosulfonated polyethylene, nitrocellusose, polyvinyl chloride, chlorinated polyolefin, polyester, polyimide, vinyl acetate - vinyl chloride copolymer, ethylene - vinyl acetate copolymer, polyethylene, polypropylene, and polycarbonate; and a surface modifier such as a silane coupling agent. The undercoat layer can be prepared by dissolving or dispersing the material described above into an appropriate solvent to prepare a coating solution, and by then coating the coating solution onto the surface of a substrate by a coating method such as spin coating, dip coating, or extrusion coating.

The thickness of the undercoat layer is normally within a range of from 0.005 to 20 µm and, preferably, within a range of from 0.1 to 10 µm.

### (Recording layer)

While a recording layer formed on the substrate is preferably a dye type containing a dye, it is not limited thereto and may also be a phase change type, or an opto-magnetic type.

Accordingly, the recording material contained in the recording layer includes an organic compound such as a dye and a phase changing metal compound.

Specific examples of the organic compound include a cyanine dye, an oxonol dye, a metal complex dye, an azo dye and a phthalocyanine dye.

Further, dyes described in JP-A Nos. 4-74690, 8-127174, 11-53758, 11-334204, 11-334205, 11-334206, 11-334207, 2000-43423, 2000-108513 and 2000-158818 can be used to advantage.

Further, the recording material is not limited to the dye but organic compounds such as triazole compound, triazine compound, cyanine compound, melocyanine compound, aminobutadiene compound, phthalocyanine compound, succinic acid compound, pyorogene compound, azo compound, oxonol benzooxazole compound, and benzotriazole compound can also be used as appropriate. Among the compounds, a cyanine compound, aminobutadiene compound, a benzotriazole compound and phthalocyanine compound are particularly preferred.

The recording layer is formed by dissolving the recording material such as a dye together with a binder or the like into an appropriate solvent, in order to prepare a coating solution, then coating the coating solution onto a substrate to form a coating film and then drying the coraing film. The concentration of the recording material in the coating solution is generally within a range of from 0.01 to 15 mass%, preferably, from within a range of from 0.1 to 10 mass% and, more preferably, within a range of from 0.5 to 5 mass% and, most preferably, within a range of from 0.5 to 3 mass%.

The recording layer can be formed by a method such as vapor deposition, sputtering, chemical vapor deposit (CVD) or solvent coating, with solvent coating being preferred. In this case, the recording layer can also be formed by optionally dissolving a quencher or a binder, etc., in addition to the dye, into the solvent, preparing a coating solution, coating the coating solution onto the surface of a substrate to form a coating film and then drying the coating film.

The solvent for the coating solution can include esters such as vinyl acetate, ethyl lactate or cellosolve acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as methylcyclohexane; ethers such as dibutylether, diethyl ether, tetrahydrofuran and dioxine; alcohols such as ethanol, n-propanol, isopropanol, n-butanol and diacetone alcohol; fluoric solvents such as 2,2,3,3-tetrafluoropropanol; and glycol ethers such as ethylene glycol monomethyl ether, ethylene glycol monoethyl ether and propylene glycolmonomethyl ether.

The solvents can be used alone, or in combinations of two or more, of them while considering the solubility of the dye used. As an alternative, various kinds of additives such as antioxidants, UV-absorbers, plasticizers and lubricants may also be added in accordance with the purpose in the coating solution.

When a binder is used, examples of the binder can include natural organic polymeric materials such as gelatin, cellulose derivative, dextrane, rosin and rubber; as well as synthetic organic polymers, for example, hydrocarbon resins such as polyethylene, polypropylene, polystyrene and polyisobutylene; vinylic resins such as polyvinyl chloride, polyvinylidene chloride, polyvinyl chloride-polyvinyl acetate copolymer; acrylic resins such as methyl polyacrylate, methyl polymethacrylate; polyvinyl alcohol, chlorinated polyethylene, epoxy resin, butyral resin, rubber derivatives, and initial condensates of thermosetting resins such as a phenol-formaldehyde resin.

When a binder is also used in combination as a material for the recording layer, the amount of binder used is generally within a range of from 0.01 to 50 times, preferably, within a range of from 0.1 to 5 times the mass of the dye.

Coating methods can include, for example, spraying, spin coating, dipping, roll coating, blade coating, doctor roll coating and screen printing. The recording layer may be a single layer or a multi layer. A thickness of the recording layer is generally within a range of from 10 to 500 nm, preferably, within a range of from 15 to 300 nm and, more preferably, a range of from 20 to 150 nm.

For improving the light fastness of the recording layer, various discoloration inhibitors can be incorporated into the recording layer. As the discoloration inhibitor, a singlet oxygen quencher is normally used. Singlet oxygen quenchers, already known and described in publications such as patent specifications can be utilized. Specific examples worthy of particular mention are, those described in JP-A Nos. 58-175693, 59-31194, 60-18387, 60-19586, 60-19587, 60-35054, 60-36190, 60-36191, 60-44554, 60-44555, 60-44389, 60-44390, 60-54892, 60-47069, 68-209995, and 4-25492, JP-B Nos. 1-38680 and 6-26028, the specification of GP No. 350399, and that described in the Journal of the Japanese Chemical Society, October, 1992, p1141 can be mentioned.

The amount of discoloration inhibitor such as a singlet oxygen quencher is usually within a range of from 0.1 to 50% by mass of the dye, preferably, within a range of from 0.5 to 45% by mass, further preferably, within a range of from 3 to 40% by mass and, particularly preferably, within a range of from 5 to 25% by mass.

### (Light-reflection layer)

With the aim of improving reflectance upon reproduction of information, a light-reflection layer is sometimes disposed adjacent to the recording layer. Light-reflecting materials used for the light reflection layer are substances having a high reflectance of laser light. Examples thereof can include metals or semi metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, SnandBi, or stainless steel. Such substances may be used alone, in combinations of two or more, or in the form of an alloy. Among them, Cr, Ni, Pt, Cu, Ag, Au, Al and stainless steel are preferred. Particularly preferred are Au metal, Ag metal, Al metal or alloys thereof. Most preferred are Ag metal, Al metal or alloys thereof. The light-reflection layer can be formed on a substrate, or on a recording layer, by vapor depositing, sputtering or ion plating the light reflecting material described above. The thickness of the light reflection layer is generally within a range of from 10 to 300 nm and, preferably, within a range of from 50 to 200 nm.

### (Adhesion layer)

The adhesion layer is an optional layer formed for improving close bondability between the reflection layer and the dummy substrate.

As materials constituting the adhesion layer, photo-curable resins are preferred and, among them, those with less cure shrinkage are preferred for preventing the warp of a disk. The photo-curable resins can include, for example, an UV-cure resin (UV-cure adhesive) such as "SD-640", and "SD-347" manufactured by Dai Nippon Ink Co. Further, for providing resiliency, the thickness of the adhesion layer is, preferably, within a range of from 1 to 1000 µm, more preferably, within a range of from 5 to 500 µm and, particularly preferably, within a range of from 10 to 100 µm.

### (Dummy substrate)

The dummy substrate has a protective function and the same materials as for the first substrate, an of an identical shape, can be used.

A protective layer adopted in other constitutions will be described later.

### (Protective layer)

With the aim of protecting the reflection layer, the recording layer or the like either physically or chemically, a protective layer is sometimes disposed.

When a form is adopted which is identical to that used in the case of manufacturing a DVD-R type optical information-recording medium, that is, a constitution of bonding two substrates to each other (including a case where one of them is a dummy substrate) with the recording layer on the inside, provision of a protective layer is not always necessary.

Examples of the materials that can be used for the protective layer can include inorganic materials such as ZnS, ZnS-SiO₂, SiO, SiO₂, MgF₂, SnO₂ and Si₃N₄, and organic materials such as thermoplastic resins, thermosetting resins and UV-curable resins. The protective layer can be formed, for example, by laminating a film obtained by extrusion of a plastic material on the reflection layer by way of an adhesive. Alternatively, the protective layer may be disposed by a method such as vacuum vapor deposition, sputtering, or coating.

Further, in a case of the thermoplastic resin or thersmosetting resin, the protective layer can also be formed by dissolving the resin into an appropriate solution to prepare a coating solution, and then coating and drying the coating solution. In a case of a UV-curable resin, the layer can either be formed as it is, or by dissolving the resin into an appropriate solvent to prepare a coating solution, coating the coating solution and then irradiating a UV light to cure the solution. Various additives such as an antistatic agent, an antioxidant and a UV-absorbent, may also be added to the coating solution, depending on the application. The thickness of the protective layer is generally within a range of from 0.1 µm to 1 mm.

Further, as an alternative constitution, it may adopt a constitution, for example, of forming a reflection layer, a recording layer and a cover layer successively on a substrate. The cover layer is preferably formed by way of an adhesion layer on the recording layer. In this case, the constitution, other than the cover layer, is as has already been described above.

### (Cover layer)

The cover layer is formed in order to protect the inside of the optical information-recording medium against impact shock, etc. The material it is not particularly limited so long as it is a transparent material, but is, preferably, a polycarbonate, cellulose triacetate or the like, and more preferably, a material having a moisture absorption ratio at 23°C, 50% RH of 5% or less.

"Transparent" in this content means transparency in transmitting light, both in respect of the recording light and the reproducing light (transmission ratio: 90% or higher).

The cover layer is formed by dissolving a photo-curable resin constituting the adhesion layer into an appropriate solvent to prepare a coating solution, then coating the coating solution at a predetermined temperature on a recording layer to form a coating film, laminating, for example, a cellulose triacetate film (TAC film) obtained by extrusion of a plastic material on the coating film and irradiating a light from above the laminated TAG film thereby curing the coating film. TAC films containing a UV-absorbent are preferred as TAC film. The thickness of the cover layer is within a range of from 0.01 to 0.2 mm, preferably, within a range of from 0.03 to 0.1 mm and, more preferably, within a range of from 0.05 to 0.095 mm.

Further, a polycarbonate sheet or the like can be used as the cover sheet.

For controlling viscosity, the coating temperature is, preferably, within a range of from 23 to 50°C, more preferably, wi thin a range of from 24 to 40°C and, further preferably, within a range of from 25 to 37°C.

For preventing warp of the disk, irradiation of UV-rays to the coating film is preferably conducted by using a pulse-type light irradiator (preferably, a UV irradiator). A pulse interval is, preferably, milli-sec or less and, more preferably, micro-sec or less. The irradiation dose per one pulse is not particularly limited, but is preferably 3 kW/cm² or less and more preferably 2 kW/cm² or less.

Further, the number of irradiation cycles is not particularly limited but it is, preferably, 20 cycle or less and, more preferably, 10 cycles or less.

Further, as has already been described above, the optical information-recording medium of the invention is applicable to a so-called ROM optical information-recording medium having a recording area (pit) in which information capable of reproduction by laser light is recorded.

### (Optical information recording and reproducing method)

The optical information recording method for an optical information-recording medium according to the invention is conducted by using the optical information-recording medium described above, for example, in a manner described below. At first, a recording light such as a semiconductor laser light is irradiated onto the side of the substrate, or onto the side of the protective layer (or cover layer) while the optical information-recording medium is rotated at a constant linear velocity, or at a constant angular velocity.

Under the irradiation of the light, it is believed that the recording layer absorbs the light and locally increase the temperature causing a physical or chemical change (for example, the formation of pits) and a change in optical characteristics, thereby recording information.

As a recording light a laser light having a wavelength of 600 nm or less is used. For example, a semiconductor laser light having an oscillation wavelength, for example, within a range of from 390 to 440 nm can be used. Preferred optical sources include a blue-purple semiconductor laser light having an oscillation wavelength within a range from 390 to 415 nm and a blue-purple SHG laser lights having a center oscillation wavelength of 425 nm or 410 nm formed by controlling an infrared semiconductor laser light having a center oscillation wavelength of 850 nm or 820 nm into a one-half wavelength by using an optical waveguide device. Particularly, use of the blue-purple semiconductor laser light is preferred with a view point of the recording density. The information recorded as described above can be reproduced by irradiating a semiconductor laser light to the optical information-recording medium onto the side of the substrate (or dummy substrate or cover layer) while rotating the optical information-recording medium at the same constant linear velocity as that described above, and detecting reflection light therefrom.

### EXAMPLES

The present invention is to be described by way of examples specifically but the invention is not limited to such examples.

### [Example 1]

### (Manufacture of optical information-recording medium)

A substrate made of a polycarbonate resin by injection-molding and having predetermined pre-pits and pre-grooves is manufactured.

The substrate has a thickness of 0. 6 mm, an outer diameter of 120 mm and an inner diameter of 15 mm, with spiral grooves (groove depth: 80 nm, groove width: 170 nm, and track pitch: 400 nm). The inclination angle of the groove measured by an AFM is 60°. Further, predetermined pre-pits and pre-grooves are formed by using a stamper capable of forming the predetermined pre-pits and pre-grooves.

A groove depth of a formed pre-pit is 80 nm and a groove width thereof is as shown in Table 1 below.

A dye represented by the following chemical formula (Rn represents α-SO₂C₄H₉ and M represents Cu in the formula) is added by 2 g in 100 ml of 2,2,3,3-tetrafluoropropanol, to prepare a dye coating solution. The thus prepared dye coating solution is coated on a substrate (groove forming surface) by a spin coating method under the conditions of 23°C, 50% RH while changing the number of rotation from 300 to 4000 rpm. Then, it is stored at 23°C, 50% RH for one hour to form a recording layer (thickness within the groove: 150 nm, thickness at land portions: 100 nm).

### [Kagaku 1]

After forming the recording layer, annealing is applied in a clean oven. Annealing is conducted at 80°C for one hour while supporting a substrate by a spacer to a stack pole.

An APC reflection layer (Ag: 98.1 mass%, Pd: 0.9 mass%, Cu: 1 mass%, thickness: 100 nm) is formed on the recording layer in an Ar atmosphere by DC sputtering (Cube manufactured by Unaxis Co.). The film thickness is controlled by means of a sputtering time.

A UV-ray curable resin (SD 661 manufactured by Dainippon Ink Co.) is coated on a reflection layer by spin coating, to which a dummy substrate made of polycarbonate (thickness: 0.6 mm) is adhered and UV-rays are irradiated to manufacture an optical information-recording medium.

The thickness of the adhesion layer comprising the UV-ray curable resin in the thus manufactured optical information-recording medium is about 30 µm.

### [Comparative Example 1]

An optical information-recording medium is manufactured in the same manner as in Example 1 except for making the groove width of the pre-pit identical with the groove width of the pre-groove (170 nm).

A reproduction test is conducted for optical information recording media manufactured in Example 1 and Comparative Example 1 using DDU1000 manufactured by Pulstech Co. (NA: 0.65, wavelength: 405 nm) and reflectivity at the pre-pit portion is measured to evaluate reproduction characteristics for auxiliary information. The results are shown in the following Table 1.

**[Table 1]**

| | | | |
|---|---|---|---|
| Groove width (nm) | 225 | 205 | 245 |
| Reflectance at groove portion (%) | 31 | 29 | 32 |

While no favorable reflectance can be obtained for the optical information-recording medium manufactured in Comparative Example 1, it is confirmed for the optical information-recording medium manufactured according to Example 1 that it is different enough as 47% reflectance for the portion with no pits for any of pit width and it is confirmed that the reproducing characteristics for the auxiliary information have no practical problem.

The optical information-recording medium according to the invention can provide high density information recording, requires no pre-writing and can obtain pre-pit signals without practical problem even when the depths of the pre-pits and pre-grooves are identical.

## Claims

1. An optical information-recording medium capable of recording and reproducing information by irradiation of a laser light at a wavelength of 600 nm or less in which at least pre-pits and pre-grooves are formed, wherein the width of the pre-pit is larger than the width of the pre-groove.

2. The optical information-recording medium according to claim 1, wherein the difference between the width of the pre-pit and the width of the pre-groove is from 10 nm to 100 nm.

3. The optical information-recording medium according to claim 1, wherein the width of the pre-pit is from 100 nm to 300 nm.

4. The optical information-recording medium according to claim 2, wherein the width of the pre-pit is from 100 nm to 300 nm.

5. The optical information-recording medium according to claim 3, wherein the width of the pre-pit is from 200 nm to 250 nm.

6. The optical information-recording medium according to claim 4, wherein the width of the pre-pit is from 200 nm to 250 nm.

7. The optical information-recording medium according to claim 5, wherein the difference between the width of the pre-pit and the width of the pre-groove is from 30 nm to 80 nm.

8. The optical information-recording medium according to claim 6, wherein the difference between the width of the pre-pit and the width of the pre-groove is from 30 nm to 80 nm.

9. The optical information-recording medium according to claim 1, wherein the width of the pre-groove is from 80 nm to 250 nm.

10. The optical information-recording medium according to claim 2, wherein the width of the pre-groove is from 80 nm to 250 nm.

11. The optical information-recording medium according to claim 1, wherein the depth for each of the pre-pit and the pre-groove is 30 nm to 200 nm.

12. The optical information-recording medium according to claim 2, wherein the depth for each of the pre-pit and the pre-groove is from 30 nm to 200 nm.

13. The optical information-recording medium according to claim 1, wherein at least one of the pitch of the pre-pits and the pitch of the pre-grooves is from 50 nm to 1000 nm.

14. The optical information-recording medium according to claim 2, wherein at least one of the pitch of the pre-pits and the pitch of the pre-grooves is from 50 nm to 1000 nm.

15. The optical information-recording medium according to claim 1, wherein the circumferential distance between the pre-pits is from 300 nm to 1000 nm.

16. The optical information-recording medium according to claim 2, wherein the circumferential distance between the pre-pits is from 300 nm to 1000 nm.

17. The optical information-recording medium according to claim 1, wherein the optical information-recording medium is a write-once type.

18. The optical information-recording medium according to claim 1, wherein the optical information-recording medium is a rewritable type.

19. The optical information-recording medium according to claim 1, wherein a recording layer, a reflection layer and an adhesion layer are formed successively on a substrate in which a dummy substrate is provided on the adhesion layer.

20. The optical information-recording medium according to claim 1, wherein a recording layer, a reflection layer, a protective layer, and an adhesion layer are formed successively on a substrate in which a dummy substrate is provided on the adhesion layer.

21. The optical information-recording medium according to claim 1, wherein a recording layer, a reflection layer, a first protective layer, an adhesion layer, and a second protective layer are formed successively on a substrate in which a dummy substrate is provided on the second protective layer.

22. The optical information-recording medium according to claim 1, wherein a recording layer, a first reflection layer, a first protective layer, an adhesion layer, a second protective layer, and a second reflection layer are formed successively on a substrate in which a dummy substrate is provided on the second reflection layer.

23. The optical information-recording medium according to claim 1, wherein a recording layer, a first reflection layer, an adhesion layer, and a second reflection layer are formed successively on a substrate in which a dummy substrate is provided on the second reflection layer.

24. The optical information-recording medium according to claim 1, wherein a reflection layer, a recording layer, and a cover layer are formed successively on a substrate, and the cover layer has 90% or more of transmittance relative to recording light and reproducing light.
